Europäisches Patentamt

European Patent Office

Office européen des brevets

(11) Veröffentlichungsnummer: **0 406 677 A2**

## (12) EUROPÄISCHE PATENTANMELDUNG

(21) Anmeldenummer: 90112202.8

(22) Anmeldetag: 27.06.90

(51) Int. Cl.⁵: **G01P 15/08**

(30) Priorität: 30.06.89 DE 3921560

(43) Veröffentlichungstag der Anmeldung:
09.01.91 Patentblatt 91/02

(84) Benannte Vertragsstaaten:
**DE FR IT**

(71) Anmelder: **Deutsche Forschungsanstalt für Luft- und Raumfahrt e.V.**
**Linder Höhe Postfach 90 60 58**
**D-5000 Köln 90(DE)**

(72) Erfinder: **Feuerbacher, Berndt, Prof. Dr.**
**Bensberger Strasse 110,**

**D-5064 Rösrath 3,(DE)**
Erfinder: **Hamacher, Hans, Dr.**
**In der Auen 20**
**D-5062 Forsbach(DE)**
Erfinder: **Jilg, Reiner, Dipl.-Ing.**
**Auf der Höhe 5**
**D-5042 Erftstadt(DE)**

(74) Vertreter: **Hilleringmann, Jochen, Dipl.-Ing. et al**
**von Kreisler-Selting-Werner,**
**Deichmannhaus am Hauptbahnhof**
**D-5000 Köln 1(DE)**

(54) Verfahren und Vorrichtung zum hochgenauen Ermitteln von Beschleunigungen.

(57) Die Genauigkeit und die untere Grenze der Messung von Beschleunigungen unter Verwendung eines Beschleunigungssensors (24) werden durch den nicht eliminierbaren Nullpunktfehler (Offset) des Sensors (24) und andere Störeinflüsse im Sensor (24) oder durch Vibrationen verursachte Störeinflüsse bestimmt. Nach der Erfindung wird das Meßsignal des Sensors (24) moduliert, indem der Sensor (24) während der Messung der Beschleunigung um eine senkrecht zu seiner Meßachse (26) verlaufenden Rotationsachse (12) kontinuierlich gedreht wird. Anhand derjenigen Beschleunigungsmeßwerte, die der Sensor (24) bei Drehung liefert, wird in einer Auswerteeinheit (32) die Beschleunigung ermittelt. Der so ermittelte Beschleunigungswert ist Offset- und Störsignal-kompensiert; insbesondere ist es mit dieser Art der Beschleunigungsbestimmung möglich, Beschleunigungen im Sub-$\mu$g-Bereich, d.h. Beschleunigungen, die erheblich kleiner sind als der Offset, zu messen.

FIG.2

EP 0 406 677 A2

## VERFAHREN UND VORRICHTUNG ZUM HOCHGENAUEN ERMITTELN VON BESCHLEUNIGUNGEN

Die Erfindung betrifft ein Verfahren sowie eine Vorrichtung zum hochgenauen Ermitteln von Beschleunigungen im Sub-$\mu$g-Bereich unter Verwendung eines Beschleunigungssensors, der Beschleunigungen selektiv in Richtung seiner Meßachse mißt.

Beim Messen von Beschleunigungen mit einem Beschleunigungssensor werden die Meßgenauigkeit und der Wert der kleinsten noch meßbaren Beschleunigung durch den nicht eliminierbaren Nullpunktfehler (Offset) des Sensors bestimmt bzw. vorgegeben. Da es einen beschleunigungsfreien Raum nicht gibt, kann ein Beschleunigungssensor nicht auf seinen Nullpunktfehler kalibriert werden. Der Offset von Beschleunigungssensoren setzt sich im allgemeinen aus einem konstanten und einem zeitlich veränderlichen niederfrequenten (quasi-statischen) Anteil zusammen.

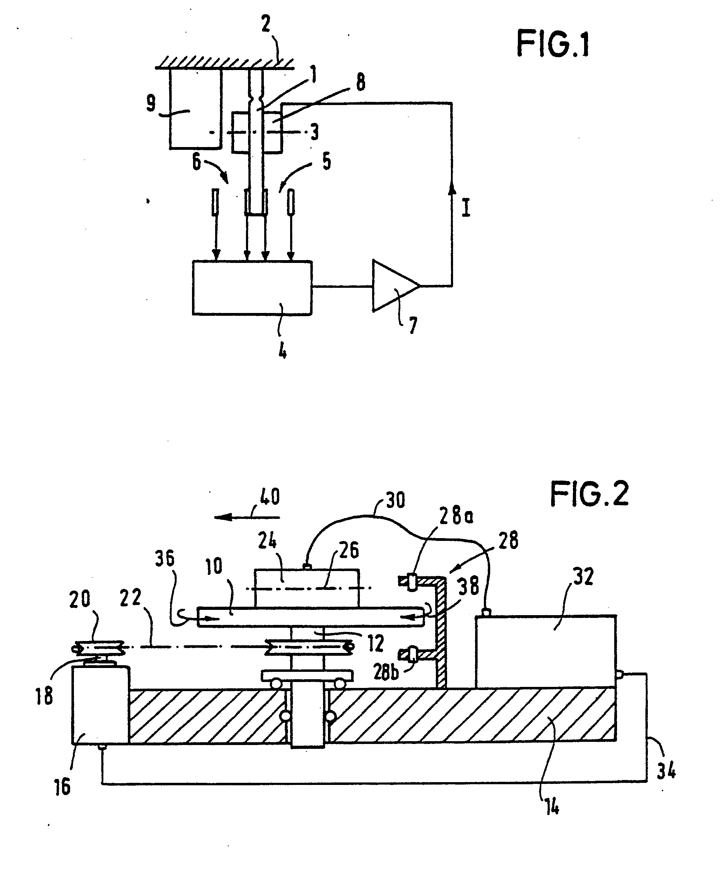

Zur Messung von niederfrequenten, d.h. quasi-statischen Beschleunigungen, werden hauptsächlich "kraftkompensierte" Sensoren eingesetzt. Sie zeichnen sich durch eine gegenüber anderen Sensortypen, wie z.B. piezomechanischen Sensoren, höhere Nullpunktkonstanz und ein niedrigeres eigeninduziertes Rauschen aus. Der Aufbau eines kraftkompensierten Beschleunigungssensors ist schematisch in Fig. 1 dargestellt. Der Sensor weist eine Prüfmasse 1 auf, die am Gehäuse 2 befestigt ist. Bei einer auf den Sensor wirkenden Beschleunigung wird die Prüfmasse 1 entlang der Meßachse 3 ausgelenkt. Diese Auslenkung wird durch einen Positionsdetektor 4 erfaßt. In Fig. 1 ist ein kapazitiver Positionsdetektor dargestellt, der die Auslenkung der Prüfmasse 1 anhand der Veränderung der Kapazität der Kondensatoren 5 und 6 und damit anhand der an diesen Kondensatoren anliegenden Spannungsveränderung feststellt und ein entsprechendes Signal ausgibt. Die beiden Kondensatoren 5 und 6 weisen jeweils eine feststehende Kondensatorplatte und jeweils eine an der Prüfmasse 1 vorgesehene Kondensatorplatte auf. Das Ausgangssignal des Positionsdetektors 4 wird in einem Verstärker 7 verstärkt. Das verstärkte Signal (in diesem Fall der Ausgangsstrom I des Verstärkers 7) fließt durch eine an der Prüfmasse 1 befestigte Spule 8. Die Spule 8 befindet sich im Magnetfeld eines Magneten 9 und erfährt bei Stromdurchfluß eine der Auslenkung der Prüfmasse 1 entgegenwirkende Bewegung, durch die die Prüfmasse 1 in ihre Nullpunktlage zurücküberführt wird. Die Kraft, mit der die Prüfmasse 1 bei auf den Sensor wirkender Beschleunigung ausgelenkt wird, wird also kompensiert, wobei der zur Kompensation erforderliche Strom I ein Maß für die Beschleunigung ist.

Der Nullpunktfehler (Offset), d.h. die Abweichung der Prüfmasse vom geometrischen Nullpunkt bei einer Beschleunigung von 0, wird durch mechanische Verspannungen des Sensorgehäuses, durch Alterung und Erschütterungen sowie durch Setzerscheinungen im Sensor hervorgerufen. Der Nullpunkt wird desweiteren beeinflußt durch einen Gleichrichtfehler der internen Sensor-Rückstellelektronik infolge von Vibrationen. Schließlich ist der Offset auch temperaturabhängig. All diese Faktoren führen dazu, daß sich bei Beschleunigungssensoren ein nicht eliminierbarer Offset in der Größenordnung von $10^{-4}$g einstellt, wobei mit g die Erdbeschleunigung bezeichnet ist. Wegen des Offset können Beschleunigungen mit Frequenzen unter ca. $10^{-2}$Hz nicht mehr genau genug gemessen werden.

Der nicht eliminierbare Offset ist aber nicht die einzige das Sensorausgangssignal beeinflussende Fehlerquelle. Neben dem Offset wird das Meßsignal auch durch den nicht eliminierbaren Hysterese-Effekt des Sensors und durch die Nichtlinearität des Ausgangssignals in Abhängigkeit von der gemessenen Beschleunigung verfälscht.

In einer Vielzahl von Fällen ist aber die genaue Bestimmung von Beschleunigungen erforderlich, die kleiner als $10^{-6}$ (Sub-$\mu$g-Bereich) sind, also kleiner sind als die durch Offset, Hysterese und Ausgangssignal-Nichtlinearität verursachten Fehler im Meßsignal.

Beispielsweise müssen bei Flugzeugnavigation, in der Raumfahrt- und Raketentechnik (Restbeschleunigungen im Orbit, Lageregelung), in der Vermessungstechnik, im Hoch- und Brückenbau, in der Seismologie und bei der physikalischen Grundlagenforschung, nämlich bei der Erforschung der sogenannten fünften Kraft, Beschleunigungen, die kleiner als $10^{-6}$g sind, exakt gemessen werden können. Bei derartig kleinen zu messenden Beschleunigungen kann der Beschleunigungswert schon deshalb nicht unmittelbar aus dem Sensorausgangssignal abgelesen werden, weil das Meßsignal "verrauscht" ist, d.h. der Sensor durch hochfrequente Vibrationen in Schwingungen versetzt wird, die zu vom Sensor erfaßte Beschleunigungen führen und sich somit dem gewünschten Beschleunigungszeitverlauf überlagern.

Der Erfindung liegt die Aufgabe zugrunde, ein Verfahren und eine Vorrichtung der eingangs genannten Art zu schaffen, mit denen Beschleunigungen ermittelt werden können, die kleiner sind als der Nullpunktfehler des Beschleunigungssensors.

Die Lösung dieser Aufgabe erfolgt erfindungsgemäß dadurch, daß Beschleunigungsmeßwerte fortlaufend in zwei entgegengesetzten Drehpositionen des Sensors in der Ebene der Meßachse gewonnen werden und daß aus dem Zeitverlauf des Beschleunigungsmeßwertes die Beschleunigung ermittelt wird.

Während der Messung der Beschleunigung in der interessierenden (Meß-)Richtung wird der Beschleunigungssensor kontinuierlich oder in 180°-Schritten intermittierend gedreht, wobei im letzteren Fall in den jeweils zwei Ruhelagen gemessen wird und diese gegenüber den Drehphasen lang sind. Das Ausgangssignal des Sensors setzt sich dabei zusammen aus dem modulierten Meßsignal (Sinusform bzw. Rechteckform), Rauschen (bis zu $10^6$ mal größer als die zu messende Beschleunigung), einem konstanten oder zeitinvarianten Offset-Signalanteil, einem sich aus der Nichtlinearität des Sensors ergebenden Signalanteil und einem weiteren Signalanteil, der sich aufgrund der Hysterese-Effekte des Sensorausgangssignals ergibt und als Schwingungssignalanteil in das Ausgangssignal eingeht. Auf der Grundlage des derart verfälschten Sensorausgangssignals wird die zu messende Beschleunigung ermittelt.

Das infolge der Drehung des Sensors modulierte Ausgangs-(Meß-)Signal wird entweder einer schmalbandigen oder breitbandigen Demodulation unterzogen. Im ersten Fall wird das modulierte Meßsignal mit einer Rechteckfunktion (Referenzsignal) multipliziert, deren Frequenz gleich der Modulationsfrequenz (Rotationsfrequenz) ist. Anschließend wird das sich derart ergebende Signal integriert. Mit Hilfe der Lock-In-Technik werden Frequenz des Referenzsignals und die Phasenlage des Referenzsignals derart an die Rotation des Sensors angepaßt oder auf diese abgestimmt, daß sich für die gewünschte Meßrichtung ein Zeitverlauf des Integralsignals von ungleich Null einstellt, das Integralsignal vielmehr einen Maximalwert annimmt. Dieser Maximalwert wird durch Abstimmung der Phasenlage des Referenzsignals relativ zur gewünschten Meßrichtung erreicht (Lock-In-Technik). Aus dem Zeitverlauf des Integrals läßt sich nunmehr direkt der Beschleunigungswert ablesen. Durch die Integration nach vorheriger Multiplikation des Meßsignals mit dem Rechteck-Referenzsignal werden nämlich das (statistisch gesehen) weiße Rauschen, der Offset, die Nichtlinearität und die Signalschwingungen infolge der Hysterese-Effekte des Sensors "herausgemittelt". Was bleibt ist das zu der zu messenden Beschleunigung proportionale Nutzsignal. Bei einer zu messenden konstanten Beschleunigung a und konstantem Offset ist das sich nach der obigen Signalverarbeitung ergebende Integrationsergebnis gleich dem Wert $\frac{2}{\pi}$ a für den Fall kontinuierlicher Drehung des Sensors und für den Fall der Drehung in 180°-Schritten. Der Beschleunigungswert entspricht hierbei dem Scheitelwert des modulierten Signals.

Neben der oben beschriebenen breitbandigen Demodulation des Meßsignals gibt es als weitere Möglichkeit die sogenannte schmalbandige. Hierbei wird das mit dem Rechteck-Referenzsignal multiplizierte modulierte Sensorausgangs signal (Meßsignal = Nutzsignal plus Störsignal) in den Frequenzbereich transformiert (z.B. Laplace- oder Fourier-transformiert). Die Bestimmung der zu messenden Beschleunigung erfolgt auf der Grundlage des Signalanteils bei der Referenzsignal-Frequenz (Rotationsfrequenz). Dieser Signalanteil ist durch die obigen Störfaktoren nahezu gänzlich unberührt. Das Rauschen ist hochfrequent; sein Anteil bei der Referenzfrequenz ist fast gleich Null, jedenfalls in hier interessierenden Größenbereich von unter $10^{-6}$ g zu vernachlässigen. Ebenso verhält es sich mit den Signalanteilen von Offsetvariationen, Hystereseschwingungen und Sensornichtlinearitäten bei der Referenzfrequenz. Der Signalanteil bei der Referenzfrequenz repräsentiert also ausschließlich den zu messenden Beschleunigungswert.

Nach der Erfindung wird die Sensor-Meßachse in Bezug auf die Richtung, in der die Beschleunigung gemessen werden soll, d.h. gegenüber dem zu messenden Beschleunigungsvektor, periodisch bewegt. Dabei sollte die Frequenz dieser Bewegung groß gegenüber der Frequenz der zu messenden Beschleunigungen, d.h. groß gegenüber der Änderung der Beschleunigungen sein. Durch anschließende Meßwertverarbeitung, z.B. mittels der Lock-in-Technik ergeben sich die Offset- und Störsignalfreie Beschleunigung und deren Frequenzspektrum. In Laborversuchen wurden mit diesem Meßprinzip Beschleunigungen mit Frequenzen im Bereich zwischen 0 Hz und ca. 5 x $10^{-2}$Hz bei guter Rauschunterdrückung ermittelt. Dabei konnte ein Beschleunigungssignal im Bereich der Auflösung des verwendeten Sensors von $10^{-6}$g aus einem Rauschpegel von $10^{-2}$g und einem Nullpunktfehler von etwa 2 x $10^{-3}$g absolut ermittelt werden.

Vorteilhafterweise ist die Meßachse in den beiden Drehpositionen jeweils auf die Beschleunigungsrichtung ausgerichtet. Dadurch, daß die Meßachse in Beschleunigungsrichtung verläuft, sind die Meßwerte maximal, was sich positiv auf die Meßgenauigkeit auswirkt.

Vorzugsweise wird die Beschleunigung auf der Grundlage von gemittelten Beschleunigungsmeßwerten bestimmt. Dazu wird in jeder Drehposition mehrmals gemessen und die so erhaltenen Beschleunigungsmeßwerte gemittelt. Die beiden Mittelwerte bilden dann die Basis für die Bestimmung der Beschleunigung. Auf diese Weise erhält man einen Mittelwert der innerhalb einer vorgegebenen Zeitspanne auftretenden Beschleunigung.

Gemäß einer Weiterbildung der Erfindung ist vorgesehen, daß der Sensor kontinuierlich gedreht und während dieser Drehung fortlaufend Beschleunigungsmeßwerte gewonnen werden, und daß der Wert für die Beschleunigung anhand der so erhaltenen Meßkurve ermittelt wird. Wie bereits oben kurz erwähnt, kann der Sensor auch in 180°-Schritten intermittierend angetrieben werden, wobei er in der nach einem 180°-Schritt eingenommenen Drehposition für die halbe Periodendauer verweilt. Das auf diese Weise erfolgende "Klappen" des Sensors derart, daß dieser mit seiner Meßachse einmal in Meßrichtung und einmal entgegengesetzt dazu zeigt, hat den Vorteil der einfacheren Signalverarbeitung. Allerdings muß die Ausrichtung des Sensors zur Meßrichtung bekannt sein. Es kann auch mit zwei um 90° gegeneinander gedrehten Sensoren gemessen werden, um Beschleunigungen in der Ebene bestimmen zu können. Um Beschleunigungen nach dem erfingungsgemäßen Verfahren im Raum messen zu können, können auch drei Sensoren verwendet werden, deren Rotationsachsen senkrecht aufeinanderstehen. Aus den drei ermittelten Beschleunigungen läßt sich dann der Vektor (Richtung und Betrag) der zu messenden Beschleunigung bestimmen.

Mit dem erfindungsgemäßen Verfahren kann auf einfache Weise die Lage einer Ebene relativ zum Horizont, d.h. der Winkel x zwischen der Ebene und dem Horizont bestimmt werden. Die Sensor-Meßachse verläuft parallel zur Ebene, so daß bei Drehung des Sensors um seine rechtwinklig zur Meßachse verlaufende Rotationsachse eine Beschleunigungsfunktion am Sensorausgang entsteht, die bei kontinuierlicher Drehung des Sensors einer Sinuswelle mit der Amplitude g sin(x) und beim Klappen des Sensors, also bei intermittierender Drehung des Sensors in 180°-Schritten, einer Rechteckwelle mit der Amplitude g sin(x) entspricht. Die Rotationsebene des Sensors, d.h. die Ebene, in der die Meßachse rotiert, verläuft dann unter dem Winkel x zum Horizont. Damit in den beiden Drehpositionen die vom Sensor gelieferten Beschleunigungsmeßwerte möglichst groß, d.h. wirkliche Scheitelwerte der Beschleunigungsfunktion sind, wird bei der Referenzsignalerzeugung der beschriebenen Signalverarbeitung ein Phasenschieber vorgesehen, mit dem die Phasenlage des Referenzsignals relativ zur Beschleunigungsfunktion geändert werden kann. Das Integrationsergebnis der beschriebenen Signalauswertung (s.o.) wird bei Phasengleichheit maximal und entspricht der Amplitude der Beschleunigungsfunktion. Damit ist der Winkel der Ebene zum Horizont berechenbar.

Die erfindungsgemäße Vorrichtung zum hochgenauen Ermitteln von Beschleunigungen unter Verwendung eines Beschleunigungssensors, der Beschleunigungen selektiv in Richtung seiner Meßachse mißt, weist eine Auswerteeinheit auf. Bei dieser Vorrichtung wird der Sensor um eine senkrecht zu seiner Meßachse verlaufende Rotationsachse gedreht, wobei der Sensor fortlaufend Meßsignale erzeugt (also den Zeitverlauf des Meßsignals mit Modulation infolge der Sensor-Rotation liefert) und die Auswerteeinheit auf der Grundlage des Meßsignal-Zeitverlaufs während mindestens einer Umdrehung (Drehung um 360°) des Sensors den Wert der Beschleunigung ermittelt.

Vorteilhafterweise ist eine Referenzsignalerzeugungsvorrichtung vorgesehen, die ein periodisches Referenzsignal erzeugt, dessen Frequenz gleich der Rotationsfrequenz des Sensors wählbar ist. Vorzugsweise wird die Frequenz des Referenzsignals von einem Drehwinkeldetektor vorgegeben, der die Drehposition des Sensors erkennt, womit sich dessen Rotationsfrequenz feststellen läßt. Damit stimmt die Referenzfrequenz automatisch mit der Rotationsfrequenz überein. Die genaue Phasenlage zwischen Referenzsignal und Sensorrotation wird, wie oben im Zusammenhang mit der Erläuterung des erfindungsgemäßen Verfahrens beschrieben, bestimmt. Die Phasenlage ist demzufolge derart veränderbar, daß das Referenzsignal bei senkrecht zur Beschleunigungsmeßrichtung verlaufender Meßachse des Sensors einen Nulldurchgang aufweist. Bei dem Referenzsignal handelt es sich um ein (periodisches) Signal, dessen Zeitverlauf innerhalb der ersten Halbperiode invers zu demjenigen innerhalb der zweiten Halbperiode ist. Das Referenzsignal kann also als eine (Rechteck, Dreieck, sinusförmige oder sonstige) Schwingung um den Nullpunkt beschrieben werden.

Bei dem Referenzsignal handelt es sich vorzugsweise um ein Rechtecksignal, das abwechselnd die Werte +1 und -1 annimmt. Das am Sensorausgang anliegende Meßsignal wird zusammen mit dem Referenzsignal zur Auswerteeinheit weitergeleitet, in der durch Korrelation der beiden Signale eine richtungsselektive Beschleunigung ermittelt wird.

Vorteilhafterweise ist der Sensor vor- und zurückdrehbar. Da nur die Beschleunigungsmeßwerte in den beiden Drehpositionen von Interesse sind, kann die elektrische Verbindung zwischen dem Sensor und der Auswerteeinheit durch einfache Leitungen erfolgen, wenn der Sensor wie bei dieser Weiterbildung der Erfindung hin- und herdrehbar ist. Das vereinfacht den Aufbau der Vorrichtung. Das Meßsignal wird dabei nur während der Ruhelagen des Sensors aufgezeichnet; die Signale während der Drehung werden also "herausgeschnitten". Damit entsteht eine dem Offset überlagerte Rechteckwelle, die ähnlich wie beim Fall der kontinuierlichen Drehung ausgewertet wird.

Vorteilhafterweise beinhaltet die Referenzsignalerzeugungsvorrichtung einen Detektor zur Erkennung der beiden vorgebbaren Drehpositonen des Sensors, wobei der Sensor in beiden Drehpositionen jeweils ein Signal erzeugt, bei dessen Vorliegen die Referenzsignalerzeugungsvorrichtung das Referenzsignal umpolt. Bei dem Detektor kann es sich beispielsweise um einen Drehwinkeldetektor handeln. Das Referenzsignal kann in vorteilhafter Weiterbildung der Erfindung zur Steuerung eines den Sensor in 180°-Schritten drehenden Schrittmotors verwendet werden. Das bei Erreichen der Drehposition erzeugte Referenzsignal dient hierbei zum einen zur Weiterleitung des am Sensorausgang anstehenden Meßsignals an die Auswerteeinheit und zum anderen -ggf. nach einer durch eine Verzögerungsschaltung erzeugten Zeitverzögerung - zur Ansteuerung des Drehantriebs für den Sensor.

Zwecks Eichung der Meßeinheit oder zur Ermittlung des "wahren" Horizonts ist die erfindungsgemäße Vorrichtung gemäß einer vorteilhaften Weiterbildung mit einem drehend antreibbaren Halter bzw. Tisch, an dem der Sensor angeordnet ist, und einer Vorrichtung zum Neigen des Tisches gegenüber der Horizontalen versehen. Vorzugsweise ist die Vorrichtung um ein Kardangelenk schwenkbar, das mittig mit der Rotationsachse angeordnet ist, und die Vorrichtung ist zum Neigen mit einem Linearversteller versehen, der entlang zweier senkrecht zueinander verlaufende Achsen verschiebbar ist und mit dem rotierenden Tisch gelenkig in Verbindung steht. Die Vorrichtung weist also einen zweiachsigen linearen Verstelltisch auf, mit dem kleine Neigungswinkel zwischen Halter und Horizont eingestellt werden können. Bei stehender Vorrichtung wird dadurch in Richtung der Meßachse des Sensors ein Bruchteil der Erdbeschleunigung erzeugt, was vom Sensor angezeigt wird. Unter der Voraussetzung, daß die Rotationsebene des Sensors nicht parallel zum Horizont ist, verändert sich das Ausgangssignal des Sensors bei dessen Drehung unter Beibehaltung der Plattenneigung; denn der Winkel, den die Meßachse und der "wahre" Horizont miteinander bilden, ändert sich bei Drehung des Sensors periodisch. Erst wenn durch Verschieben des Linearverstellers der Tisch derart geneigt ist, daß das Ausgangssignal des Sensors während einer Umdrehung konstant bleibt, rotiert der Sensor in der Horizontalen. Das in diesem Fall vom Sensor gelieferte Meßsignal stellt den Offset des Sensors dar.

Um während mehrerer Umdrehungen die Meßsignale des Sensors abgreifen zu können, weist die Vorrichtung in vorteilhafter Weiterbildung der Erfindung Schleifringe auf, über die die Energieversorgungsschaltung und die Auswerteeinheit elektrisch mit dem Sensor verbunden sind.

Nachfolgend werden anhand der Figuren Ausführungsbeispiele der Erfindung näher erläutert. Im einzelnen zeigen:

Fig. 1 schematisch den Aufbau eines Beschleunigungssensors,

Fig. 2 die Vorrichtung zur hochgenauen Ermittlung von Beschleunigungen,

Fig. 3 Zeitdiagramme, die die Meßwertverarbeitung verdeutlichen,

Fign. 4 bis 8 die einzelnen Schritte bei der digitalen Meßwertverarbeitung,

Fig. 9 eine Vorrichtung zur Erzeugung von Beschleunigungen im Sub-$\mu$g-Bereich und

Fig. 10 eine Darstellung der sich bei der Vorrichtung nach Fig. 9 ergebenden Beschleunigungsvektoren.

In Fig. 2 ist schematisch der Aufbau der Vorrichtung zum hochgenauen Ermitteln von Beschleunigungen dargestellt. Die Vorrichtung weist einen Halter in Form einer Scheibe 10 auf, die um eine Rotationsachse 12 drehbar ist. Die Rotationsachse 12 ist an einer Grundplatte 14 drehbar gelagert. Zum Drehen der Scheibe 10 ist ein Motor 16 vorgesehen, an dessen Antriebswelle 18 ein Antriebsrad 20 befestigt ist, welches über einen Treibriemen 22 die Rotationsachse 12 und damit die Scheibe 10 drehend antreibt.

Auf der Scheibe 10 ist ein Beschleunigungssensor 24 befestigt, der in Fig. 2 lediglich als "black box" dargestellt ist und beispielsweise den in Fig. 1 gezeigten Aufbau aufweist. Der Beschleunigungssensor 24 mißt Beschleunigungen in Richtung seiner Meßachse 26. Zur Erkennung der Drehposition der Scheibe 10 ist ein Detektor 28 vorgesehen, der ein Licht aussendendes Element 28a und ein Licht empfangendes Element 28b aufweist, zwischen denen die Scheibe 10 angeordnet ist. In der Scheibe 10 sind mehrere Schlitze angeordnet, so daß bei Rotation der Scheibe 10 das Licht empfangende Element 28b Lichtimpulse vom Licht aussendenden Element 28a empfängt, so daß die Drehposition der Scheibe 10 anhand der Anzahl der Lichtimpulse festgestellt werden kann.

Der Sensor 24 ist über Signal- und Versorgungsleitungen 30 mit einer Steuer- und Auswerteeinheit 32 verbunden. Die Steuer- und Auswerteeinheit 32 ist ferner über Leitungen 34 mit dem Motor 16 verbunden. Die Energieversorgung für den Motor 16, für die Steuer- und Auswerteeinheit 32 und für den Sensor 24 ist in Fig. 2 der Einfachheit halber nicht dargestellt.

Bei der in Fig. 2 gezeigten Vorrichtung wird die Scheibe 10 zwischen zwei entgegengesetzten Drehpositionen hin- und herbewegt, ist also in den beiden durch die Pfeile 36 und 38 angedeuteten Drehrichtungen drehbar.

Zur Ermittlung der Beschleunigung in Richtung des Pfeils 40 (Beschleunigungsvektor bzw. Komponente davon) wird die Scheibe 10 in eine erste Drehposition gebracht, in der die Meßachse 26 des Sensors 24 auf die Beschleunigungsrichtung ausgerichtet ist. In dieser Drehstellung der Scheibe 10 erzeugt der Detektor 28 ein Referenzsignal, das der Steuer- und Auswerteeinheit 32 zugeführt wird, die daraufhin das am Ausgang des Sensors 24 anliegende Meßsignal weiterverarbeitet, indem sie es zunächst zwischenspeichert. Anschließend wird (über die Steuer- und Auswerteeinheit 32) der Motor 16 derart angesteuert, daß sich die Scheibe 10 in Richtung des Pfeils 36 bewegt. Nach einer 180° Drehung der Scheibe 10, die von dem Detektor 28 erkannt wird, wird die Ansteuerung des Motors 16, z.B. auf das Referenzsignal des Detektors 28 hin, unterbrochen. Das in dieser Drehstellung der Scheibe 10 am Ausgang des Sensors 24 anstehende Meßsignal wird der Steuer- und Auswerteeinheit 32 zugeführt, die auf der Grundlage dieses und des in der ersten Drehstellung des Sensors 24 erhaltenen Meßwertes die Beschleunigung in Richtung des Pfeils 40, d.h. den Betrag des Beschleunigungsvektors 40 ermittelt. In seiner zweiten Drehposition mißt der Sensor 24 die Beschleunigung in der bezüglich seiner Meßachse 26 entgegengesetzten Richtung, liefert aber einen Meßwert, der die Beschleunigung in Richtung des Pfeils 40 repräsentiert. Für die nächste Messung wird der Motor 16 umgekehrt angetrieben, d.h. die Scheibe 10 dreht sich aus der zweiten Drehposition in Richtung des Pfeils 38 in die erste Drehposition zurück.

In der Steuer- und Auswerteeinheit 32 wird die Beschleunigung auf der Grundlage der beiden in den zwei entgegengesetzten Drehpositionen gemessenen Beschleuni gungsmeßwerte ermittelt. Das Ausgangssignal des Sensors 24 ist, wie eingangs erwähnt, durch den nicht vorherbestimmbaren und deshalb unbekannten Offset (Nullpunktfehler) und andere Störsignale verfälscht. Durch die Messung der Beschleunigung in Richtung des Pfeils 40 bei zwei um 180° entgegengesetzten Drehpositionen des Sensors 24 mißt dieser die Beschleunigung in beiden Richtungen seiner Meßachse 26. In der einen Drehposition liefert der Meßsensor 24 also ein um den Offset und die anderen Störsignale vergrößertes Meßsignal, während er in der anderen Drehposition ein um den Offset und die anderen Störsignale vermindertes Meßsignal liefert. Die Differenz zwischen beiden Meßwerten ist also doppelt so groß wie die Beschleunigung in Richtung des Pfeils 40; denn in beiden Drehpositionen, in denen gemessen wird, verläuft die Meßachse 26 des Sensors 24 in Beschleunigungsrichtung. Durch Modulation der Meßsignale des Sensors 24 wird auf diese Weise also ein Offset-freier Wert für die Beschleunigung ermittelt.

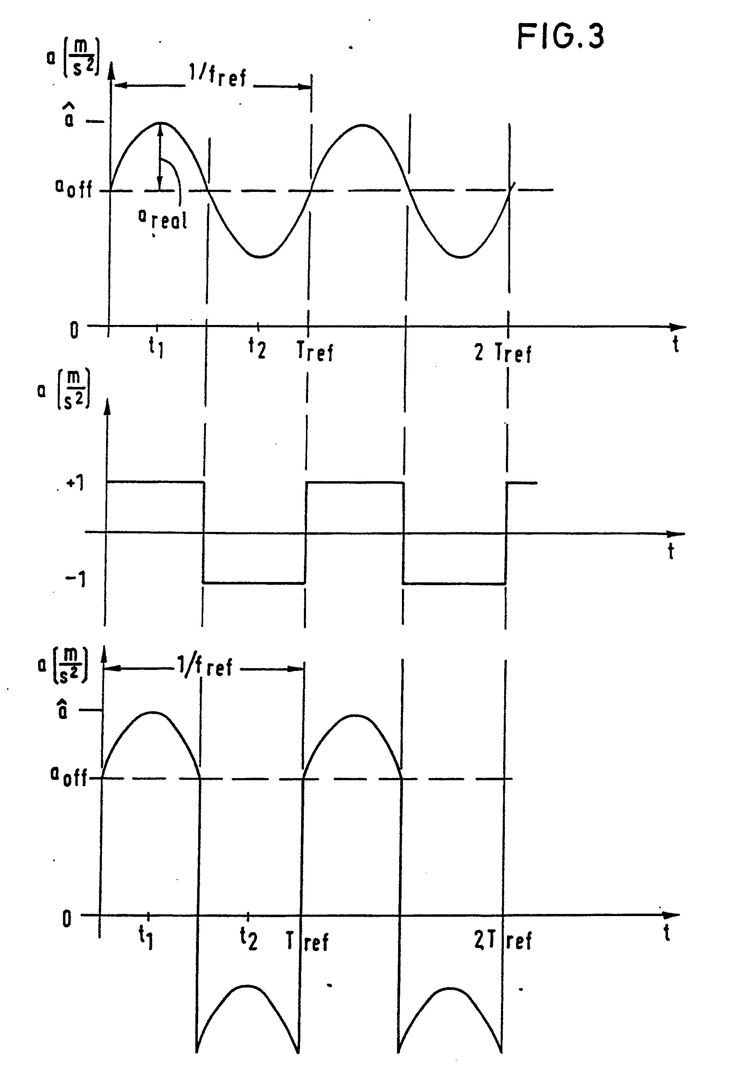

Für den Fall, daß die Scheibe 10 kontinuierlich gedreht wird und das am Ausgang des Sensors 24 anstehende Meßsignal über die Zeit aufgetragen wird, ergibt sich eine Meßkurve, die in Fig. 3 im obersten Diagramm dargestellt ist. Diese Meßkurve stellt jedoch nicht den sich am Ausgang des Sensors einstellenden Signalverlauf dar, da in Fig. 3 die Rauschsignalanteile nicht berücksichtigt und demzufolge nicht eingezeichnet sind. Außerdem nicht berücksichtigt weil graphisch nur schwer wiedergebbar sind die Einflüsse der Nichtlinearität und der Hysterese-Effekte des Sensors auf dessen Meßsingal.

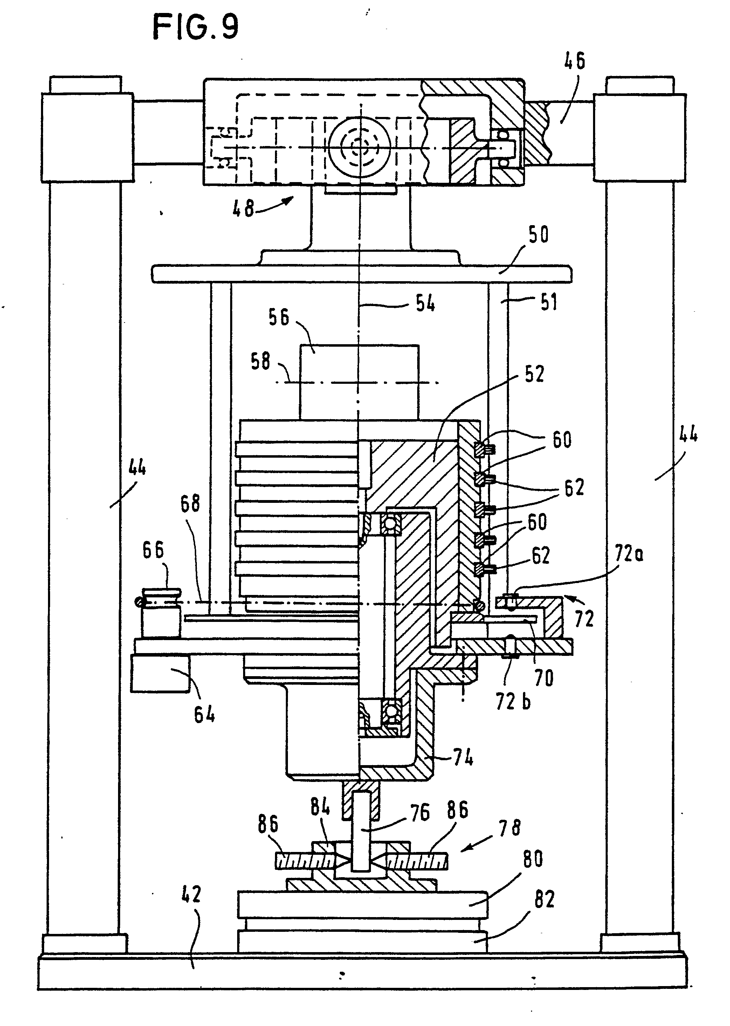

Bei kontinuierlich angetriebener Scheibe 10 erfolgt die elektrische Verbindung zwischen der Steuer- und Auswerteeinheit 32 sowie der Energieversorgung einerseits und dem Sensor 24 andererseits über Schleifringe, was im einzelnen noch im Zusammenhang mit der Fig. 9 erläutert wird. Im obersten Diagramm nach Fig. 3 ist die Meßkurve bei Messung einer Beschleunigung im Sub-$\mu$g-Bereich dargestellt. Dem Beschleunigungswert $a_{off}$, den der Sensor aufgrund des Nullpunktfehlers ausgibt, ist eine Sinusmeßkurve überlagert, die aus der Drehung des Sensors bei auf diesen wirkender Beschleunigungskraft resultiert. Die Periodendauer der Drehbewegung des Sensors 24 ist mit $T_{ref}$ bezeichnet, wodurch sich eine Frequenz $f_{ref}$ der Drehbewegung ergibt. Die zu den Zeitpunkten $t_1$ und $t_2$ gewonnenen Meßwerte sind diejenigen Beschleunigungsmeßwerte, die der Sensor bei in Beschleunigungsrichtung ausgerichteter Meßachse liefert. Zu den Zeitpunkten $t_1$ und $t_2$ weist der Sensor 24 also die in Fig. 2 dargestellte sowie die dazu um 180° versetzte Drehposition auf. Das Ausgangssignal des Sensors 24 ist zu den Zeitpunkten, zu denen seine Meßachse 26 rechtwinklig zur Meßrichtung 40 verläuft, gleich dem durch den Offset bedingten Meßwert. Der Meßwert zum Zeitpunkt $t_1$ im obersten Diagramm der Fig. 3 subtrahiert um den nicht bekannten Wert $a_{off}$ stellt den Betrag der tatsächlichen Beschleunigung $a_{real}$ in Meßrichtung 40 dar. Der Meßwert $a_{real} + a_{off}$ zum Zeitpunkt $t_1$ kann aber nicht am Sensorausgang abgegriffen werden, da bei der obigen Betrachtung die Störeinflüsse Rauschen, Hysterese und Nichtlinearität nicht berücksichtigt sind.

Die Meßwertverarbeitung bei während der Drehung des Sensors 24 kontinuierlich gemessener Meßkurve erfolgt in Anlehnung an die sogenannte Lock-in-Technik. Dabei wird von einer Referenzschaltung innerhalb der Steuer- und Auswerteeinheit 32 ein Referenzsignal erzeugt, dessen Frequenz automatisch auf diejenige der Rotationsbewegung der Scheibe eingestellt wird und dabei bezüglich der Meßwertkurve, induziert durch die einwirkende Beschleunigungskomponente in der Meßrichtung 40, eine Phasenverschiebung von Null aufweist. Der Zeitverlauf dieses Referenzsignals ist im mittleren Diagramm der Fig. 3 dargestellt. Bei der mittels der Lock-in-Technik verarbeiteten modulierten (Sinus-)Meßkurve ergibt sich bei der Multiplikation des Meßsignals mit dem Referenzsignal das im untersten Diagramm der Fig. 3 dargestellte Ergebnissignal, wenn das Referenzsignal dieselbe Frequenz wie die Meßkurve und bezüglich dieser keine Phasenverschiebung aufweist. Bei sämtlichen anderen Frequenzen des Referenzsignals wird das Ergebnissignal (Komponentenmessung) zu Null. Für den in Fig. 3 behandelten Fall ergibt sich nach Multiplikation des Rechtecksignals mit dem Meßsignal der im untersten Diagramm dargestellte Signalverlauf. Der Mittelwert dieses Signalverlaufs, der durch Integration ermittelt wird, entspricht dem zu ermittelnden Beschleunigungswert $a_{real}$ in Meßrichtung.

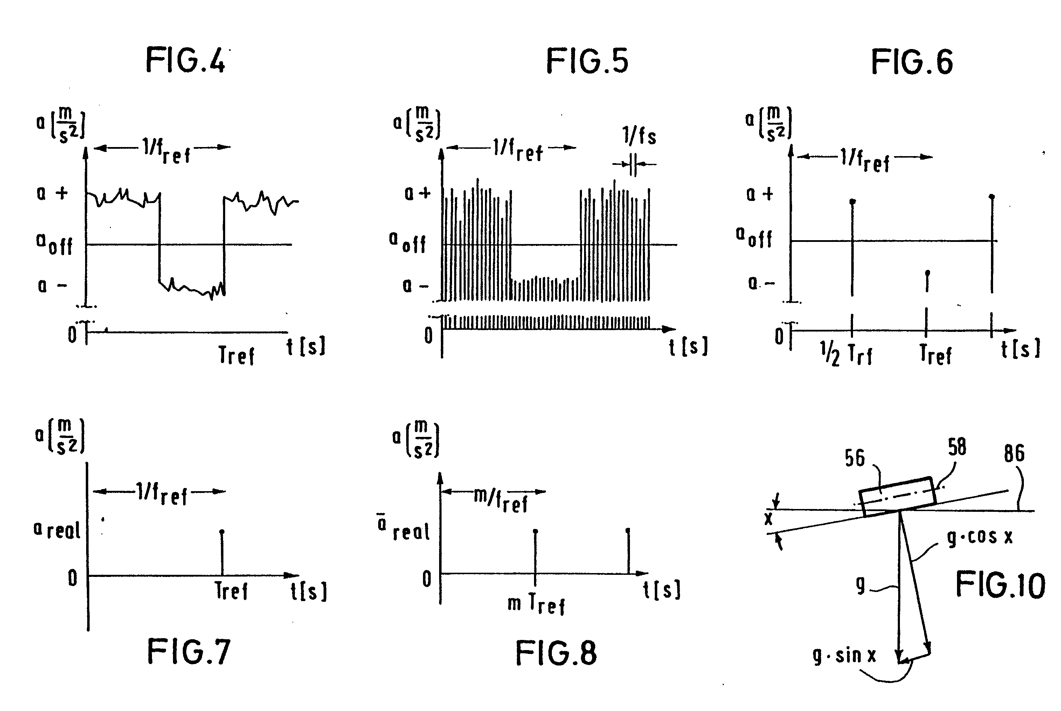

In den Fign. 4 bis 8 sind die verschiedenen Stufen bei der digitalen Verarbeitung der Meßsignale des Sensors 24 dargestellt. Für den eingezeichneten Signalverlauf gilt das wie im Zusammenhang mit Fig. 3 Gesagte. Die Drehbewegung des Sensors 24 erfolgt in 180°-Schritten, wobei der Sensor 24 in seinen beiden Meßstellungen, in denen seine Meßachse 26 in Richtung der Beschleunigung 40 verläuft, jeweils für die Hälfte der Periodendauer $T_{ref}$ der Drehbewegung verweilt. Es ergibt sich somit der in Fig. 4 dargestellte Meßsignalverlauf. Dabei ist mit $a_{off}$ der aus dem Offset resultierende Pegel bezeichnet. Mit a+ ist der Meßwert bei Messung der Beschleunigung in der einen (positiven) Richtung der Meßachse 26 bezeichnet, während sich bei Messung der Beschleunigung in der anderen (negativen) Richtung der Meßachse 26, also nach einer 180°-Drehung des Sensors 24, der Meßwert a- ergibt. Diesem analogen Meßwertverlauf entspricht der in Fig. 5 dargestellte digitale Meßwertverlauf, wobei das analoge Meßsignal mit der Abtastfrequenz fs abgetastet worden ist. Nach Mittelung der Meßwerte des Sensors 24 über jeweils die Dauer, in der er in einer seiner beiden Drehpositionen verweilt, ergeben sich innerhalb jeder halben Periodendauer der Drehbewegung die in Fig. 6 graphisch dargestellten Meßwerte. Nach Multiplikation "des pro Periodenhälfte gemittelten" Signalverlaufs mit einem dem mittleren Diagramm der Fig. 3 entsprechenden Rechtecksignal und Integration dieses sich aus der Multiplikation ergebenden Signalverlaufs ergibt sich für jede Periode der Drehbewegung der Wert $a_{real}$ nach Fig. 7. Durch Mittelung dieser Werte $a_{real}$ über m Perioden stellt sich der Wert $\overline{a}_{real}$ gemäß Fig. 8 ein.

Die anhand der Fign. 4 bis 8 beschriebene digitale Signalverarbeitung bietet insbesondere bezüglich der schaltungstechnischen Realisierung des Auswerteteils der Steuer- und Auswerteeinheit 32 Vorteile.

Fig. 9 zeigt - teilweise geschnitten - den Aufbau einer Meß- und Simulationsvorrichtung zur absoluten Beschleunigungsmessung im Sub-µg-Bereich. Mit dieser Vorrichtung lassen sich ferner Beschleunigungssensoren eichen und der "wahre" Horizont auffinden. Die Vorrichtung weist ein Gestell auf, das aus einer Grundplatte 42, darauf angeordneter vertikaler Träger 44 und einem die vertikalen Träger 44 an deren oberen Enden verbindenden Querträger 46 besteht. Im Querträger 46 befindet sich eine kardanische Aufhängung 48, an der ein Gestell 50 aufgehängt ist. Innerhalb des Gestells 50 ist ein Rotationskörper 52 drehbar gelagert, der einen Tisch bzw. Halter für einen Meßsensor bildet. Der Rotationskörper 52 weist eine zylinderförmige Gestalt auf und ist um seine vertikal verlaufende Längsachse 54 drehbar. Auf der freiliegenden Stirnseite des zylindrischen Rotationskörpers 52 ist ein Meßsensor 56 befestigt, dessen Meßachse 58 rechtwinklig zur Rotationsachse 54 verläuft. Am Umfang des Rotationskörpers 52 befinden sich Schleifringe 60, die die elektrische Verbindung zwischen dem Meßsensor 56 und der Auswerteeinheit sowie der Energieversorgungsquelle (beide in Fig. 9 nicht dargestellt) herstellen. An einer Längsstrebe 51 des Gestells 50 sind Schleifer 62 vorgesehen, die bei Rotation des Rotationskörpers 52 an den Schleifringen 60 entlangschleifen.

Am Gestell 50 ist ferner ein Antriebsmotor 64 befestigt, auf dessen Antriebswelle eine Antriebsrolle 66 befestigt ist. Die Drehbewegung des Antriebsmotors 64 wird über einen um die Antriebsrolle 66 und den Rotationskörper 52 geführten Treibriemen 68 auf den Rotationskörper 52 übertragen. Ferner ist ein den Rotationskörper 52 umschließender geschlitzter Ring 70 vorgesehen, der zur Ermittlung der Drehposition des Rotationskörpers 52 mit Hilfe eines Fotodetektors 72 dient. Der Fotodetektor 72 besteht aus einem Licht aussendenden Element 72a und einem Licht empfangenden Element 72b.

Das der kardanischen Aufhängung 48 gegenüberliegende Ende des Gestells 50 ist mit einer Nabe 74 versehen. In der Nabe 74 ist der Rotationskörper 52 gelagert. An der Nabe 74 ist ein Finger 76 befestigt, dessen geometrische Achse mit der Rotationsachse 54 zusammenfällt. Auf der Grundplatte 42 ist ein zweiachsiger linearer Verstelltisch 78 (sogenannter zweiachsiger Linearversteller) befestigt, der über einen (piezo-mechanischen) Antrieb verfügt, was in Fig. 9 der Übersichtlichkeit wegen nicht dargestellt ist. Der Verstelltisch 78 besteht im wesentlichen aus zwei parallelen Platten 80 und 82, die jeweils entlang einer Achse verschiebbar sind, wobei die beiden Achsen rechtwinklig zueinander verlaufen. An der oberen der beiden Platten ist eine Aufnahme 84 befestigt, die den Finger 76 der Nabe 74 aufnimmt und mit diesem gelenkig verbunden ist, wobei der Finger 76 zwischen zwei Einstellschrauben 86 einstellbar eingespannt ist. Beim Verstellen des zweiachsigen Verstelltisches 78 wird das Gestell 50 mitgenommen, wobei es um die kardanische Aufhängung 48 verschwenkt wird.

Mit Hilfe des Verstelltisches 78 kann das Gestell 50 verschwenkt werden, so daß die Rotationsachse 54 des Rotationskörpers 52 in einem spitzen Winkel zur Vertikalen verläuft. Die Verschwenkung des Gestells 50 entspricht einer Neigung des Sensors 56 derart, daß dessen Meßachse 58 in demjenigen Winkel zur Horizontalen verläuft, den die Rotationsachse 54 und die Vertikale bilden. Durch lediglich geringfügige Neigung des Sensors 56 können in Richtung seiner Meßachse Bruchteile der Erdbeschleunigung von ca. $10^{-7}$g erzeugt werden, wobei g die Erdbeschleunigung ist. Die Vorrichtung nach Fig. 9 dient also zur Erzeugung bzw. Simulation von Beschleunigungen im Sub-$\mu$g-Bereich, die mit dem anhand der Fig. 3 sowie der Fign. 4 bis 8 beschriebenen Verfahren ermittelt werden können.

Die bei Neigung des Sensors 56 auf diesen wirkenden Beschleunigungsvektoren sind in Fig. 10 graphisch dar gestellt. Die Drehachse des Meßsensors 56 ist bezüglich des (wahren) Horizonts, der in Fig. 10 durch die Linie 86 angedeutet ist, um den Winkel x geneigt. In den beiden Drehpositionen des Sensors 56, in denen die Meßachse 58 mit dem Horizont 86 den Winkel x bildet, wirkt auf den Meßsensor 56 in Richtung seiner Meßachse die Beschleunigung g sin(x). Die in vertikaler Richtung auf den Meßsensor 56 wirkende Erdbeschleunigung g wird also aufgeteilt in eine senkrecht zur Meßachse 58 wirkende Beschleunigung g cos(x) und die in Richtung der Meßachse 58 wirkende Beschleunigung g sin(x).

Durch die Vorrichtung nach Fig. 9 kann der Sensor 56 Beschleunigungen im Sub-$\mu$g-Bereich ausgesetzt werden, die durch die Modulation des Meßsignals infolge der Rotation des Sensors sowie durch die anhand der Fign. 3 bis 8 erläuterte Meßwertverarbeitung mit Hilfe des erfindungsgemäßen Verfahrens gemessen bzw. ermittelt werden. In Laborversuchen hat sich dabei gezeigt, daß mit diesem Verfahren Beschleunigungen ermittelt werden können, die erheblich kleiner sind als der durch den Nullpunktfehler bedingte Meßwertfehler des Beschleunigungssensors. So ist es gelungen, bei einem Offset im Bereich von $10^{-3}$g Beschleunigungen zu ermitteln, die in der Größenordnung von $10^{-6}$g liegen. Durch das erfindungsgemäße Verfahren können also quasi-statische, Offset- und Störsignal-kompensierte Beschleunigungsbestimmungen durchgeführt werden, so daß der Wert der kleinsten noch meßbzw. bestimmbaren Beschleunigung nicht durch den Nullpunktfehler und durch Störgrößen bestimmt ist, sondern kleiner als diese ist.

Wird der Winkel x durch Verschieben des Verstelltisches 78 derart eingestellt, daß das Ausgangssignal des Sen sors 56 bei dessen Rotation konstant ist, wirkt auf den Sensor 56 in Richtung seiner Meßachse 58 keine Beschleunigung, mithin dreht sich die Meßachse 58 in einer Ebene, die parallel zum Horizont verläuft. Eine mit dem Sensor 56 gekoppelte, parallel zur Meßachse 58 und senkrecht zur Rotationsachse 54 verlaufende Fläche stellt also den "wahren" Horizont dar. Bei dem vom Sensor 56 ausgegebenen Meßwert handelt es sich dann um das durch den Offset verursachte Ausgangssignal des Sensors 56, das zusammen mit anderen Störanteilen durch die beschriebene Signalverarbeitung eliminiert wird.

## Ansprüche

1. Verfahren zum hochgenauen Ermitteln von Beschleunigungen unter Verwendung eines Beschleunigungssensors (24;56), der Beschleunigungen selektiv in Richtung seiner Meßachse (26;58) mißt, **dadurch gekennzeichnet**, daß Beschleunigungsmeßwerte fortlaufend in zwei entgegengesetzten Drehpositionen des Sensors in der Ebene der Meßachse (26;58) gewonnen werden und daß aus dem Zeitverlauf des Beschleunigungsmeßwertes die Beschleunigung ermittelt wird.

2. Verfahren nach Anspruch 1, dadurch gekennzeichnet, daß die Meßachse (26;58) des Sensors (24;56) auf die Meßrichtung (40) ausgerichtet wird.

3. Verfahren nach Anspruch 1 oder 2, dadurch gekennzeichnet, daß der Sensor (24;56) kontinuierlich gedreht wird und während der Drehung des Sensors fortlaufend die Beschleunigung gemessen wird.

4. Verfahren nach einem der Ansprüche 1 bis 3, dadurch gekennzeichnet, daß der Sensor (24;56) jeweils in 180°-Schritten gedreht wird, wobei er in den beiden entgegengesetzten Drehpositionen für jeweils die halbe Periodendauer einer Umdrehung verweilt.

5. Verfahren nach einem der Ansprüche 1 bis 4, dadurch gekennzeichnet, daß der Wert für die Beschleunigung auf der Grundlage des Zeitverlaufs des vom Sensor (24;56) während mindestens einer Umdrehung ausgegebenen Meßwertsignals ermittelt wird.

6. Verfahren nach Anspruch 5, dadurch gekennzeichnet, daß pro Umdrehung des Sensors (24;56) das während der ersten oder der zweiten Periodenhälfte anstehende Meßwertsignal invertiert und der derart erhaltene Signalverlauf integriert wird und daß der Wert für die Beschleunigung anhand des Zeitverlaufs des Integrals erhalten wird.

7. Verfahren nach Anspruch 6, dadurch gekennzeichnet, daß der Wert für die Beschleunigung anhand der relativen Extremwerte des Zeitverlaufs des Integrals während einer Umdrehung des Sensors (24;56) um 360° ermittelt wird.

8. Verfahren nach Anspruch 6, dadurch gekennzeichnet, daß das Meßwertsignal des Sensors (24;56) in den Frequenzbereich transformiert wird und daß für die Bestimmung des Wertes der Beschleunigung nur die Signalanteile bei der Frequenz, mit der der Sensor (24;56) gedreht wird, selektiert werden.

9. Verfahren nach einem der Ansprüche 1 bis 8, dadurch gekennzeichnet, daß der Sensor (24;56) geneigt wird, wobei seine Meßachse (26;58) in einem Winkel (x) zum Horizont (86) verläuft, und daß die Neigung des Sensors (24;56) derart verändert wird, daß die in den beiden Drehpositionen gewonnenen Beschleunigungsbeträge einander gleich sind.

10. Verfahren nach Anspruch 9, dadurch gekennzeichnet, daß als die beiden Drehpositionen des Sensors (24; 56) diejenigen Drehpositionen ausgewählt werden, in denen bei der eingestellten Neigung des Sensors (24;56) dessen Meßachse und der Horizont (86) miteinander jeweils den größten Winkel (x) bilden.

11. Vorrichtung zur Durchführung des Verfahrens nach einem der Ansprüche 1 bis 10, mit einem Beschleunigungssensor (24;56), der Beschleunigungen selektiv in Richtung seiner Meßachse (26;58) mißt, und einer Auswerteeinheit (32), die die Meßsignale des Sensors (24; 56) empfängt und daraus die Beschleunigung ermittelt, dadurch gekennzeichnet, daß der Sensor (24; 56) um eine senkrecht zu seiner Meßachse (26;58) verlaufende Rotationsachse (12;54) drehbar ist, daß der Sensor (24;56) während seiner Drehung fortlaufend ein Meßsignal liefert und daß in der Auswerteeinheit (32) auf der Grundlage des Zeitverlaufs des Meßsignals während mindestens einer Umdrehung des Sensors (24;56) der Wert der Beschleunigung ermittelbar ist.

12. Vorrichtung nach Anspruch 11, dadurch gekennzeichnet, daß der Sensor (24;56) in beide Drehrichtungen (36,38) drehbar ist.

13. Vorrichtung nach Anspruch 11 oder 12, dadurch gekennzeichnet, daß eine Referenzsignal-Erzeugungsvorrichtung (28,72) vorgesehen ist, die ein periodisches Referenzsignal erzeugt, dessen Frequenz gleich der Rotationsfrequenz des Sensors (24;56) wählbar ist.

14. Vorrichtung nach Anspruch 12, dadurch gekennzeichnet, daß das Referenzsignal ein Rechtecksignal ist, das abwechselnd die Werte +1 und -1 annimmt und in der Auswerteeinheit (32) mit dem Meßsignal des Sensors (24;56) multiplizierbar ist.

15. Vorrichtung nach Anspruch 13 oder 14, dadurch gekennzeichnet, daß die Phasenlage des Referenz signals relativ zur Rotation des Sensors (24;56) derart veränderbar ist, daß das Referenzsignal bei senkrecht zur Beschleunigungsmeßrichtung verlaufender Meßachse des Sensors (24;56) jeweils einen Nulldurchgang aufweist.

16. Vorrichtung nach einem der Ansprüche 13 bis 15, dadurch gekennzeichnet, daß ein Drehwinkeldetektor zur Erkennung der Drehposition des Sensors (24;56) und Vorgabe der Nulldurchgänge des Referenzsignals vorgesehen ist.

17. Vorrichtung nach einem der Ansprüche 11 bis 16, dadurch gekennzeichnet, daß der Sensor (24;56) von einem Schrittmotor in 180°-Schritten intermittierend antreibbar ist, wobei der Sensor (24;56) in der gerade eingenommenen Drehposition für die Hälfte der Periodendauer seiner Rotation verweilt.

18. Vorrichtung nach einem der Ansprüche 11 bis 17, dadurch gekennzeichnet, daß der Sensor an einem drehend antreibbaren Halter (52) angeordnet ist, und daß eine Vorrichtung (78) zum Neigen des Halters (52) gegenüber der Horizontalen (86) vorgesehen ist.

19. Vorrichtung nach Anspruch 18, dadurch gekennzeichnet, daß der Halter (52) um ein Kardangelenk (48) schwenkbar ist, durch das die Rotationsachse (54) hindurch verläuft, und daß die Vorrichtung (78) zum Neigen des Halters (52) eine Platte (80) aufweist, die entlang zweier senkrecht zueinander verlaufender Achsen verschiebbar ist und mit dem rotierenden Halter (52) gelenkig in Verbindung steht.

20. Vorrichtung nach einem der Ansprüche 11 bis 19, dadurch gekennzeichnet, daß Schleifringe (60) vorgesehen sind, über die die Meßsignale des Sensors (56) abgegriffen werden und der Sensor (56) mit Energie versorgt wird.

FIG.1

FIG.2

# FIG.3

# FIG.4

$a\left[\dfrac{m}{s^2}\right]$

$\overset{1/f_{ref}}{\longleftrightarrow}$

$a+$

$a_{off}$

$a-$

$0$

$T_{ref}$   $t\,[s]$

# FIG.5

$a\left[\dfrac{m}{s^2}\right]$

$\overset{1/f_{ref}}{\longleftrightarrow}$   $\overset{1/f_s}{\longleftrightarrow}$

$a+$

$a_{off}$

$a-$

$0$

$t\,[s]$

# FIG.6

$a\left[\dfrac{m}{s^2}\right]$

$\overset{1/f_{ref}}{\longleftrightarrow}$

$a+$

$a_{off}$

$a-$

$0$   $\frac{1}{2}T_{rf}$   $T_{ref}$   $t\,[s]$

$a\left[\dfrac{m}{s^2}\right]$

$\overset{1/f_{ref}}{\longleftrightarrow}$

$a_{real}$

$0$

$T_{ref}$   $t\,[s]$

# FIG.7

$a\left[\dfrac{m}{s^2}\right]$

$\overset{m/f_{ref}}{\longleftrightarrow}$

$\bar{a}_{real}$

$0$

$m\,T_{ref}$   $t\,[s]$

# FIG.8

56   58   86

$x$

$g\cdot\cos x$

$g$

$g\cdot\sin x$

# FIG.10

EP 0 406 677 A2

# FIG.9